# EUROPÄISCHE PATENTSCHRIFT

(11) **EP 4 344 921 B1**
(45) Veröffentlichungstag und Bekanntmachung des Hinweises auf die Patenterteilung: **08.10.2025**
(21) Anmeldenummer: 23193564.4
(22) Anmeldetag: 25.08.2023
(51) Int. Cl.: B60K 6/48, B60W 10/06, B60W 10/08, B60W 30/192, B60W 20/40

(54) **VERFAHREN ZUR STEUERUNG EINES ANTRIEBSSTRANGS IN EINEM HYBRID-FAHRZEUG UND HYBRID-FAHRZEUG**
METHOD FOR CONTROLLING A DRIVE TRAIN IN A HYBRID VEHICLE AND HYBRID VEHICLE
PROCÉDÉ DE COMMANDE D'UNE CHAÎNE CINÉMATIQUE DANS UN VÉHICULE HYBRIDE ET VÉHICULE HYBRIDE

(30) Priorität: 30.09.2022 DE 102022210439
(43) Veröffentlichungstag der Anmeldung: 03.04.2024
(73) Patentinhaber: VOLKSWAGEN AG, 38440 Wolfsburg (DE)
(72) Erfinder: Bunkus, Johannes, 39393 Hötensleben OT Barneberg (DE); Kocherscheid, Leon, 38446 Wolfsburg (DE)

(56) Entgegenhaltungen:
- EP-A1- 2 127 984
- EP-A1- 2 226 227
- EP-A1- 3 045 366
- EP-A1- 3 974 225
- US-A1- 2013 166 122

## Beschreibung

Die Erfindung betrifft ein Verfahren zur Steuerung eines Antriebsstrangs in einem Hybrid-Fahrzeug und ein Hybrid-Fahrzeug.

In Hybrid-Fahrzeugen kann die Fortbewegung z.B. rein elektrisch, gemischt elektrisch/nicht-elektrisch oder rein nicht-elektrisch erfolgen. Hierzu kann ein Hybrid-Fahrzeug einen ersten Antrieb, wie z.B. einen Elektromotor, und einen weiteren Antrieb, wie z.B. eine Verbrennungskraftmaschine, aufweisen. Während einer rein elektrischen Fortbewegung ist z.B. der Elektromotor eingeschaltet, während die Verbrennungskraftmaschine ausgeschaltet sein kann. Die Verbrennungskraftmaschine kann aber z.B. gestartet werden, um in einer gemischten Fortbewegung den Elektromotor zu entlasten oder eine vollständige Antriebsleistung zur Verfügung zu stellen. Auch bekannt ist, dass die Verbrennungskraftmaschine z.B. gestartet wird, um eine Batterie des elektrischen Antriebs über einen Generator mit Strom zu versorgen.

Mit der stetigen Verschärfung der Emissionsgesetzgebung kann es erforderlich sein, eine Verbrennungskraftmaschine, z.B. nach einem Kaltstart, mit reduzierter Leistung, beispielsweise im Leerlauf, zu betreiben, um insbesondere die Komponenten einer Abgasnachbehandlung bis auf einen zulässigen Betriebszustand aufzuheizen.

Um unnötige Emissionen beim Betrieb einer Verbrennungskraftmaschine zu reduzieren bzw. gar nicht erst entstehen zu lassen, sind aus dem Stand der Technik unterschiedliche Verfahren zum Betreiben von Hybrid-Fahrzeugen bekannt.

Die DE 102019 127 720 A1 schlägt vor, einen entsprechend niedrigen Schadstoffausstoß im kalten Betrieb einer Brennkraftmaschine zu erreichen, indem in einer ersten Betriebsphase das Hybridelektrofahrzeug nur durch die elektrische Antriebsmaschine angetrieben wird. Parallel wird die Brennkraftmaschine - vorzugsweise im Leerlauf - betrieben, um die Abgasnachbehandlungseinrichtung auf eine vordefinierte Temperatur zu temperieren. In einer zweiten Betriebsphase, in welcher die Abgasnachbehandlung entsprechend aufgeheizt ist, wird das Hybridelektrofahrzeug dann mittels der Brennkraftmaschine angetrieben. Auch beschrieben ist, dass in Abhängigkeit von einem Ladezustand der Batterie des Hybridelektrofahrzeugs prädiktiv ein Beginn der ersten Betriebsphase ermittelt wird.

Die WO 2020 / 232104 A1 bezieht sich allgemein auf Hybridfahrzeuge, insbesondere auf die Verbesserung des Kraftstoffverbrauchs von Hybridfahrzeugen.

Die DE 10 2016 106 466 A1 betrifft Systeme und Verfahren zur Steuerung des Betriebs einer Kraftmaschine in einem Fahrzeug mit Verbrennungsmotor.

Die US 2013 / 0 166 122 A1 betrifft ein gattungsgemäßes Verfahren zur Steuerung eines Antriebsstrangs in einem Hybrid-Fahrzeug.

Ferner ist bekannt, dass sich Elektromotoren in Folge einer entsprechenden Belastung erwärmen können, wobei es durch die Erwärmung zu unerwünschten Leistungseinbußen oder sogar zu Beschädigungen des Elektromotors kommen kann.

Es stellt sich das technische Problem, ein Verfahren zur Steuerung eines Antriebsstrangs in einem Hybrid-Fahrzeug und ein entsprechendes Hybrid-Fahrzeug zu schaffen, welche Emissionen beim Betrieb eines Hybrid-Fahrzeugs weiter reduzieren. Vorzugsweise können durch das geschaffene Verfahren und das entsprechende Hybrid-Fahrzeug Aspekte der Bereitstellung der Antriebsleistung und/oder der Kühlung des Antriebsstrangs weiter verbessert werden.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird daher ein Verfahren zur Steuerung eines Antriebsstrangs in einem Hybrid-Fahrzeug, wobei der Antriebsstrang mindestens einen ersten Antrieb und mindestens einen weiteren Antrieb aufweist, wobei das Verfahren die folgenden Schritte umfasst:
- Überwachen einer zum Betrieb des ersten Antriebs bereitgestellten Leistung,
- Bestimmen mindestens eines Start-Parameters in Abhängigkeit der bereitgestellten Leistung,
- Auswerten, ob der mindestens eine Start-Parameter ein Start-Kriterium erfüllt,
- Starten des weiteren Antriebs, wenn der mindestens eine Start-Parameter das Start-Kriterium erfüllt.

Erfindungsgemäß wird der mindestens eine Start-Parameter als eine zum Betrieb des ersten Antriebs bereitgestellte Energiemenge bestimmt, wobei das Start-Kriterium erfüllt ist, wenn die bereitgestellte Energiemenge größer oder gleich einer Schwellenwert-Energiemenge ist. Hierdurch wird erreicht, dass die zum Betrieb des ersten Antriebs bereitgestellte Energiemenge auf die Schwellenwert-Energiemenge begrenzt wird, bevor der weitere Antrieb gestartet wird. Somit kann z.B. sichergestellt werden, dass eine Rest-Energiemenge in der Batterie als Reserve für Notfälle zur Verfügung steht.

Weiter erfindungsgemäß wird die bereitgestellte Energiemenge als zeitliches Integral über die bereitgestellte Leistung von einem ersten Zeitpunkt bis zu einem Ist-Zeitpunkt ermittelt. Das zeitliche Integral kann auch als Leistungsintegral bezeichnet werden. Das zeitliche Integral kann z.B. durch numerische Integration der Werte der bereitgestellten Leistung von einem ersten Zeitpunkt bis zu einem Ist-Zeitpunkt erfolgen. Hierzu kann das Verfahren über die zuvor erläuterte Speichereinheit z.B. auf einen zeitlichen Verlauf der bereitgestellten Leistung zugreifen. Der erste Zeitpunkt kann z.B. dem Beginn des Betriebs des ersten Antriebs entsprechen, also beispielsweise dem Zeitpunkt, zu welchem eine Fahrt mit dem Hybrid-Fahrzeug begonnen wurde.

Vorzugsweise ist der erste Antrieb ein elektrischer Antrieb. Der erste Antrieb kann z.B. einen Elektromotor umfassen oder als ein solcher ausgebildet sein. Insbesondere kommt ein Asynchronmotor, Permanentmagnet-erregter Synchronmotor oder fremd- oder stromerregter Synchronmotor in Betracht. Der erste Antrieb kann z.B. mittels einer Batterie mit Energie versorgt werden. Die Batterie kann Teil des ersten Antriebs und/oder des Antriebsstrangs sein.

Vorzugsweise ist der weitere Antrieb ein nicht-elektrischer Antrieb. Der weitere Antrieb kann z.B. eine Verbrennungskraftmaschine umfassen oder als eine solche ausgebildet sein. Die Verbrennungskraftmaschine kann z.B. mittels Diesel oder Benzin mit Energie versorgt werden. Ferner kann der weitere Antrieb eine Abgasnachbehandlung zur Reduktion von Emissionen aufweisen.

Es ist selbstverständlich denkbar, dass der Antriebsstrang in einem Hybridfahrzeug weitere Maschinenelemente zur Umwandlung von Bewegungsgrößen bzw. zur Kraft- und Energieumwandlung aufweist, wie z.B. ein Getriebe, eine Kupplung, oder einen Generator.

Vorzugsweise wird das Hybrid-Fahrzeug vor einem Starten des weiteren Antriebs ausschließlich mittels des ersten Antriebs angetrieben, d.h. die zur Fortbewegung des Hybrid-Fahrzeugs notwendige Antriebsleistung wird allein über den ersten Antrieb bereitgestellt.

Die bereitgestellte Leistung kann einer von einem Nutzer des Hybrid-Fahrzeugs angeforderten Leistung entsprechen bzw. mit der angeforderten Leistung korrelieren. Ferner kann der Nutzer die angeforderte Leistung z.B. über einen entsprechenden Pedalweg anpassen. Die bereitgestellte Leistung kann demnach zu verschiedenen Zeitpunkten unterschiedliche Werte aufweisen.

Vorzugsweise wird die zum Betrieb des ersten Antriebs bereitgestellte Leistung mittels Kenngrößen ermittelt. So können z.B. die an dem ersten Antrieb anliegende Spannung und Stromstärke als Kenngrößen erfasst werden. Hieraus kann dann ein aktueller Wert der bereitgestellten elektrischen Leistung ermittelt werden, d.h. ein Wert der Leistung für einen Ist-Zeitpunkt. Der Ist-Zeitpunkt kann z.B. einen Zeitpunkt der Erfassung der Kenngrößen bezeichnen. Ferner kann der Ist-Zeitpunkt einen Zeitstempel umfassen, sodass Kenngrößen oder ermittelte Werte jeweils dem Ist-Zeitpunkt zugeordnet werden können.

Das Überwachen bezeichnet, dass die zum Betrieb des ersten Antriebs bereitgestellte, insbesondere aktuelle, Leistung ermittelt wird. Das Überwachen kann z.B. durch ein, insbesondere sensorisches, Erfassen von Kenngrößen des ersten Antriebs umfassen. Selbstverständlich können auch noch weitere oder andere Kenngrößen des Hybrid-Fahrzeugs zur Ermittlung der bereitgestellten Leistung erfasst werden. Entsprechende Methoden zur Erfassung von Kenngrößen und zur Ermittlung einer Leistung eines Antriebs sind dem Fachmann bekannt. Durch das Überwachen ergibt sich in vorteilhafter Weise, dass die zum Betrieb des ersten Antriebs bereitgestellte Leistung quantifiziert wird und somit zur Weiterverarbeitung innerhalb des Verfahrens genutzt werden kann.

Das Bestimmen des Start-Parameters bzw. eines Werts des Start-Parameters erfolgt in Abhängigkeit der ermittelten Leistung. Mit anderen Worten: Der Start-Parameter ist eine Funktion der zum Betrieb des ersten Antriebs bereitgestellten Leistung. In der einfachsten Ausführungsform wird der Start-Parameter als ein Wert der bereitgestellten Leistung bestimmt. Hierzu kann dem Start-Parameter der ermittelte Wert der bereitgestellten Leistung z.B. für einen Ist-Zeitpunkt zugewiesen werden. Das Bestimmen des Start-Parameters in Abhängigkeit der bereitgestellten Leistung kann aber auch anderes ausgebildet sein, wie nachfolgend noch erläutert wird.

Das Start-Kriterium muss erfüllt sein, um einen Start des weiteren Antriebs freizugeben. Der Start-Parameter bzw. der bestimmte Wert des Start-Parameters wird genutzt, um das Start-Kriterium auszuwerten. Mit anderen Worten: Das Start-Kriterium kann z.B. eine Bedingung sein, die vom Start-Parameter bzw. einem bestimmten Wert des Start-Parameters erfüllt werden muss, bevor der weitere Antrieb gestartet wird. Hierdurch wird erreicht, dass der Start des weiteren Antriebs von der bereitgestellten Leistung des ersten Antriebs abhängig ist. So kann z.B. sichergestellt werden, dass der weitere Antrieb erst gestartet wird, wenn dies in Anhängigkeit der bereitgestellten Leistung für erforderlich erachtet wird. Dies kann beispielsweise der Fall sein, weil der erste Antrieb zum Zwecke der Kühlung entlastet werden soll und zumindest ein Anteil der Antriebsleistung durch den weiteren Antrieb bereitgestellt werden soll.

Das Start-Kriterium kann z.B. bedingen, dass ein bestimmter Wert des Start-Parameters größer oder gleich einem Schwellenwert ist. Wird der Schwellenwert z.B. durch die bereitgestellte Leistung überschritten, ist das Start-Kriterium erfüllt und ein Starten des weiteren Antriebs wird freigegeben.

Der Schwellenwert kann vorbestimmt sein und z.B. einem Wert einer vorbestimmten Dauerleistung des ersten Antriebs entsprechen. Für Elektromotoren ist es beispielsweise üblich, dass eine Dauerleistung aus Versuchen vorbekannt ist. Die Dauerleistung entspricht hierbei z.B. einem Wert der Leistung des elektrischen Antriebs, der dauerhaft bereitgestellt werden kann. Wird die Dauerleistung, insbesondere über längere Zeit überschritten, so kann es zu einer überdurchschnittlichen Wärmeentwicklung im elektrischen Antrieb kommen.

Ist das Start-Kriterium erfüllt, so wird der weitere Antrieb gestartet. Das Starten des weiteren Antriebs kann selbstverständlich ein Erzeugen eines elektrischen Signals und die entsprechende Ausgabe an den weiteren Antrieb umfassen. Das Signal kann insbesondere durch eine Steuerung des Hybrid-Fahrzeugs bzw. eine Einrichtung zur Steuerung des Antriebsstrangs erzeugt werden. Das Starten des weiteren Antriebs kann, z.B. mittels eines Anlassers erfolgen. Denkbar ist auch, dass das Starten z.B. mittels des ersten Antriebs, z.B. über eine entsprechende mechanische Kopplung, erfolgt. Beispielsweise kann der erste Antrieb das Starten des weiteren Antriebs durch das Schließen einer entsprechenden Kupplung bewirken. So kann z.B. ein Anlasser zum Starten des weiteren Antriebs im Hybrid-Fahrzeug entfallen, wodurch insbesondere Gewicht und Kosten eingespart werden.

Vorzugsweise umfasst das Starten des weiteren Antriebs, dass dieser zumindest einen Anteil der Antriebsleistung bereitstellt, z.B. über eine entsprechende Übertragung der Leistung an ein Getriebe. So kann der erste Antrieb mit niedrigerer Leistung betrieben werden und entsprechend entlastet werden.

Vorzugsweise werden einer oder mehrere der erläuterten Schritte des erfindungsgemäßen Verfahrens fortlaufend, insbesondere iterativ, ausgeführt. Insbesondere wird für einen Ist-Zeitpunkt jeweils eine Iteration des Verfahrens ausgeführt. Selbstverständlich müssen in einer Iteration des Verfahrens nicht alle Schritte des Verfahrens vollständig ausgeführt werden, d.h. beispielsweise, wenn das Start-Kriterium nicht erfüllt ist, wird die Iteration beendet, ohne dass der weitere Antrieb gestartet wird. Wird das Start-Kriterium erfüllt, so wird das Starten des weiteren Antriebs in der aktuellen Iteration freigegeben und initiiert. Durch das iterative Ausführen des Verfahrens kann dann z.B. ein zeitlicher Verlauf der bereitgestellten Leistung bzw. der Werte der Leistung, insbesondere für die jeweiligen Ist-Zeitpunkte, erstellt werden.

Ferner können die bestimmten Ergebnisse bzw. Werte des Verfahrens gespeichert werden, z.B. in einer entsprechenden Speichereinheit, die Teil des Hybrid-Fahrzeugs sein kann. Selbstverständlich kann das Verfahren auf Ergebnisse bzw. Werte aus vorangegangenen Iterationen zugreifen.

Der Ist-Zeitpunkt kann - wie zuvor erläutert z.B. einen Zeitstempel umfassen, der den Beginn einer Iteration markiert. So kann für jeden Ist-Zeitpunkt ein Wert der bereitgestellten Leistung zeitlich markiert werden. Selbstverständlich können auch weitere Schritte bzw. Ergebnisse und/oder Werte des Verfahrens durch den Ist-Zeitpunkt zeitlich markiert werden. Eine Zeitdauer zwischen zwei Ist-Zeitpunkten kann als Laufzeit des Verfahrens bezeichnet werden.

Durch das erfindungsgemäße Verfahren wird der Start des weiteren Antriebs so lange wie möglich verzögert, wodurch Emissionen entsprechend vermieden werden. Hierzu wird ein Zeitpunkt des Starts des weiteren Antriebs durch Auswerten des Start-Kriteriums bestimmt. Durch Berücksichtigen der bereitgestellten Leistung des ersten Antriebs kann sichergestellt werden, dass die bereitgestellte Leistung, z.B. zur Fortbewegung des Hybrid-Fahrzeugs, ausreichend ist bzw. der weitere Antrieb gestartet wird, wenn der ersten Antrieb z.B. in Folge einer leistungsbedingten Wärmeentwicklung überbelastet oder gar beschädigt würde. Durch das erfindungsgemäße Verfahren werden somit einerseits Emissionen vermieden die aus dem nicht notwendigen Betrieb des weiteren Antriebs resultieren würden. Anderseits wird durch das erfindungsgemäße Verfahren sichergestellt, dass der weitere Antrieb gestartet wird, sobald dies z.B. zu Zwecken der Kühlung des ersten Antriebs für nötig erachtet wird. So kann eine unerwünschte Überbeanspruchung des ersten Antriebs vermieden werden.

In einer weiteren Ausführungsform wird das Start-Kriterium in Abhängigkeit von einem Wert einer Peak-Leistung des ersten Antriebs bestimmt. Die Peak-Leistung entspricht einem Maximalwert der verfügbaren Leistung im Betrieb des ersten Antriebs. D.h. der Maximalwert ist ein Wert der Leistung, die technisch maximal zum Betrieb des ersten Antriebs bereitstellbar ist. Es ist beispielsweise üblich, dass für einen elektrischen Antrieb eine Peak-Leistung aus Versuchen vorbekannt bzw. vorbestimmt ist. Für einen elektrischen Antrieb entspricht der Wert der Peak-Leistung z.B. dem ungefähr Zweifachen des Werts der bereitstellbaren Dauerleistung.

Durch Einbeziehen der Peak-Leistung ist der Start des weiteren Antriebs nicht nur von der bereitgestellten Leistung des ersten Antriebs, sondern zusätzlich von der technisch verfügbaren Leistung, nämlich der Peak-Leistung, des ersten Antriebs abhängig. Dem Start-Kriterium kann als Schwellenwert z.B. der Wert der Peak-Leistung zugewiesen sein. Der weitere Antrieb wird dann z.B. gestartet, wenn die Peak-Leistung erreicht ist.

In einer weiteren Ausführungsform wird das Start-Kriterium in Abhängigkeit von einem Wert einer zum Vorheizen des weiteren Antriebs notwendigen Zeitdauer bestimmt. Die zum Vorheizen des weiteren Antriebs notwendige Zeitdauer kann auch als Vorheiz-Zeitdauer bezeichnet werden. Die Vorheiz-Zeitdauer entspricht insbesondere der Zeitdauer, die zum Vorheizen einer Abgasnachbehandlung des weiteren Antriebs auf eine vorbestimmte Betriebstemperatur benötigt wird. Der Wert der Vorheiz-Zeitdauer kann z.B. aus Versuchen vorbekannt sein und somit vorbestimmt sein.

Vorzugsweise erfolgt das Vorheizen mittels eines Heizelements. Das Heizelement kann Teil des weiteren Antriebs sein. Insbesondere kann das Starten des weiteren Antriebs bezeichnen, dass das Heizelement zum Vorheizen des weiteren Antriebs angeschaltet wird und so z.B. die Abgasnachbehandlung vorwärmt. Das Heizelement kann z.B. als ein Heizwiderstand ausgebildet sein und durch eine Batterie des Hybrid-Fahrzeugs mit Energie versorgt werden. Alternativ oder kumulativ kann die Abgasnachbehandlung aber auch nach dem Starten des weiteren Antriebs durch Abwärme beim Betrieb des weiteren Antriebs erwärmt werden, wie z.B. durch Abgase einer Verbrennungskraftmaschine.

Es sei erwähnt, dass das Vorheizen des weiteren Antriebs auch mit Hilfe einer Abwärme des ersten Antriebs erfolgen kann. So kann gleichzeitig der erste Antrieb gekühlt werden, während der weitere Antrieb vorgeheizt wird. Dies steigert die Energieeffizienz des Verfahrens bzw. des Hybrid-Fahrzeugs.

In einer weiteren Ausführungsform wird der Wert der zum Vorheizen des weiteren Antriebs notwendigen Zeitdauer in Abhängigkeit einer Ist-Temperatur des weiteren Antriebs bestimmt wird. Eine Ist-Temperatur des weiteren Antriebs kann sensorisch bestimmt werden. Die Ist-Temperatur bezeichnet insbesondere eine Ist-Temperatur der Abgasnachbehandlung. Die zum Vorheizen des weiteren Antriebs notwendige Zeitdauer kann z.B. kürzer ausfallen, wenn die Ist-Temperatur höher als eine vorbestimmte Referenztemperatur ist oder länger ausfallen, wenn die Ist-Temperatur niedriger als eine die vorbestimmte Referenztemperatur ist. Die Referenztemperatur kann z.B. der Umgebungstemperatur entsprechen. Ein Maß um welches sich die Zeitdauer in Abhängigkeit der Ist-Temperatur verändert, kann vorbestimmt sein. Hierdurch kann bei dem Starten des weiteren Antriebs berücksichtigt werden, wie lange der weitere Antrieb tatsächlich vorgeheizt werden muss, um z.B. eine gewünschte Betriebstemperatur zu erreichen. So können insbesondere unnötige Emissionen durch ein zu kurzes oder zu langes Vorheizen des weiteren Antriebs vermieden werden.

Ferner kann die bereitgestellte Energiemenge z.B. mit einem Wärmeeintrag in den ersten Antrieb korrelieren. Durch das Bestimmen der bereitgestellten Energiemenge kann somit auch der bereits aufgenommene Wärmeeintrag berücksichtigt werden. Der weitere Antrieb kann dann gestartet werden, wenn der erste Antrieb z.B. zu Kühlungszwecken entsprechend entlastet werden soll.

Die jeweiligen Energiemengen können z.B. über die Spannungswerte einer Batterie bestimmt werden. Aber auch andere Arten des Bestimmens der Energiemengen sind denkbar, wie im Folgenden erläutert wird.

Es ist ferner denkbar, dass der Wert der bereitgestellten Energiemenge um einen vorbestimmten Wert reduziert wird. Zum Beispiel kann der Wert der bereitgestellten Energiemenge um den vorbestimmten Wert reduziert werden, wenn ein zu einem Zwischen-Zeitpunkt ermittelter Wert der bereitgestellten Leistung kleiner als ein Wert der bereitgestellten Leistung der zu einem vorangegangenen Zeitpunkt ist. So können z.B. Kühlungseffekte berücksichtigt werden, die sich in Folge einer reduzierten Leistungsanforderung für den ersten Antrieb ergeben. Der Wert zur Reduzierung des Leistungsintegrals kann z.B. aus Versuchen vorbestimmt sein und mit eine entsprechenden Kühlleistung des ersten Antriebs korrelieren.

In einer weiteren Ausführungsform wird die Schwellenwert-Energiemenge als Wert einer Teilmenge einer Maximal-Energiemenge bestimmt, wobei die Maximal-Energiemenge der zur Bereitstellung der Peak-Leistung über eine Maximal-Zeitdauer notwendigen Energiemenge entspricht. Die Maximal-Zeitdauer entspricht also einer Zeitdauer, die die Peak-Leistung zum Betrieb des ersten Antriebs maximal verfügbar ist, bevor der erste Antrieb z.B. durch Wärmeentwicklung überbeansprucht würde. Die Maximal-Zeitdauer kann z.B. aus Versuchen vorbekannt bzw. vorbestimmt sein. Mittels der Maximal-Zeitdauer und dem Wert der Peak-Leistung kann somit die Maximal-Energiemenge ermittelt werden, die zum Betrieb des ersten Antriebs unter Peak-Leistung aufgewendet würde. Die Maximal-Energiemenge kann bspw. durch zeitliche Integration ermittelt werden.

Die Teilmenge der Maximal-Energiemenge kann z.B. mittels eines Skalierungsfaktors bestimmt werden. Der Skalierungsfaktor ist vorzuweise ein Wert zwischen null und eins, so dass die Teilmenge kleiner oder gleich der Maximal-Energiemenge ist. So kann sichergestellt werden, dass die Schwellenwert-Energiemenge höchstens der Maximal-Energiemenge entspricht.

Die Teilmenge der Maximal-Energiemenge kann z.B. auch in Abhängigkeit der Zeitdauer, die zum Vorheizen des weiteren Antriebs notwendig ist, bestimmt werden. Hierzu kann die Teilmenge beispielsweise durch Integration der Peak-Leistung über eine Zeitdauer, die einer Differenz, die dem Wert zwischen der Maximal-Zeitdauer und Vorheiz-Zeitdauer, entspricht, bestimmt werden.

In einer weiteren Ausführungsform erfolgt das Bestimmen des mindestens einen Start-Parameters erst, wenn die bereitgestellte Leistung größer oder gleich einem Wert einer vorbestimmten Dauerleistung des ersten Antriebs ist. Dies entspricht einem Vor-Kriterium, welches dem eigentlichen Start-Kriterium vorgeschaltet ist. So wird in vorteilhafter Weise sichergestellt, dass das Start-Kriterium erst ausgewertet wird, wenn die bereitgestellte Leistung dem Wert der Dauerleistung entspricht oder diesen überschritten hat.

In einer bevorzugten Ausführungsform wird der zuvor erläuterte erste Zeitpunkt bestimmt, wenn die bereitgestellte Leistung größer oder gleich einem Schwellenwert ist. Der Schwellenwert kann insbesondere dem Wert der Dauerleistung des ersten Antriebs entsprechen.

In einer weiteren Ausführungsform erfolgt das Starten des weiteren Antriebs erst, wenn die zum Betrieb des ersten Antriebs bereitgestellte Leistung um einen Wert reduziert wurde, der einer Leistung entspricht, die zum Starten des weiteren Antriebs benötigt wird. Beispielsweise ist es denkbar, dass die eingesparte Leistung des ersten Antriebs, die durch die Reduzierung verfügbar wird, einem Anlasser des weiteren Antriebs für das Starten des weiteren Antriebs zur Verfügung gestellt wird. So kann sichergestellt werden, dass der Wert, um den die bereitgestellte Leistung reduziert wurde, zum Starten des weiteren Antriebs verfügbar ist. Nach dem Starten des weiteren Antriebs kann die bereitgestellte Leistung des ersten Antriebs wieder auf den ursprünglichen Wert erhöht bzw. gesteigert werden.

Vorzugsweise erfolgt die Reduzierung der bereitgestellten Leistung als stetige Übergangsfunktion. D.h. die Reduzierung der Leistung erfolgt in gleichmäßigen Schritten bis der angestrebte Wert der Reduzierung erreicht ist. Hierdurch wird erreicht, dass die Antriebsleistung nicht ruckartig reduziert wird, was den Fahrkomfort für den Nutzer erhöht. Selbstverständlich kann die bereitgestellte Leistung auch wieder als stetige Übergangsfunktion gesteigert werden, sobald der weitere Antrieb gestartet worden ist.

Weiter vorgeschlagen wird ein Hybrid-Fahrzeug mit einem Antriebsstrang, wobei der Antriebsstrang mindestens einen ersten Antrieb und mindestens einen weiteren Antrieb aufweist, wobei das Hybrid-Fahrzeug ferner eine Einrichtung zur Steuerung des Antriebsstrangs umfasst, wobei die Einrichtung dazu ausgebildet ist, ein Verfahren nach einer in dieser Offenbarung beschriebenen Ausführungsform auszuführen.

Die Einrichtung zur Steuerung des Antriebsstrangs kann als Mikrocontroller ausgebildet sein oder einen solchen umfassen. Die Einrichtung kann signaltechnisch mit dem ersten Antrieb und dem weiteren Antrieb verbunden sein. Selbstverständlich kann die Einrichtung signaltechnisch auch mit weiteren Maschinenelementen des Hybrid-Fahrzeugs verbunden sein.

Insbesondere kann die Einrichtung die zur Ausführung des erfindungsgemäßen Verfahrens notwendigen Signale empfangen, verarbeiten und Signale erzeugen und ausgeben, insbesondere mindestens ein Signal zum Starten des weiteren Antriebs. Die Einrichtung kann ferner die zuvor erläuterte Speichereinheit umfassen oder ausbilden oder mit dieser signaltechnisch verbunden sein.

Mittels des vorgeschlagenen Hybrid-Fahrzeugs kann ein Verfahren ausgeführt werden, welches einen oder alle der in dieser Offenbarung genannten technischen Effekte erzielen kann. Die sich aus den technischen Effekten ergebenden Vorteile treffen entsprechend auch auf das erfindungsgemäße Hybrid-Fahrzeug zu.

Weiter vorgeschlagen wird ein Computerprogrammprodukt mit einem Computerprogramm, wobei das Computerprogramm Softwaremittel zur Ausführung eines, mehrerer oder aller Schritte des erfindungsgemäßen Verfahrens nach einer der in dieser Offenbarung beschrieben Ausführungsformen, insbesondere zur Ausführung der Überwachung, des Bestimmens, der Auswertens und des Startens, umfasst. Das Computerprogramm kann von oder in einem Computer oder von der beschriebenen Einrichtung zur Steuerung des Antriebsstrangs ausgeführt werden.

Dies bedeutet, dass das erfindungsgemäße Verfahren zum Beispiel ein computerimplementiertes Verfahren ist. Beispielsweise können alle Schritte oder nur einige der Schritte (d.h. weniger als die Gesamtzahl der Schritte) des erfindungsgemäßen Verfahrens von einem Computer oder der Einrichtung ausgeführt werden. Eine Ausführungsform des computerimplementierten Verfahrens ist eine Verwendung des Computers oder der Einrichtung zur Durchführung des erfindungsgemäßen Verfahrens.

Das Computerprogrammprodukt ermöglicht in vorteilhafter Weise die Durchführung eines erfindungsgemäßen Verfahrens gemäß einer der in dieser Offenbarung beschriebenen Ausführungsformen, für die zuvor technische Vorteile beschrieben worden sind.

Die Erfindung wird anhand von Ausführungsbeispielen näher erläutert. Die Figuren zeigen:
- Fig. 1: eine schematische Darstellung einer ersten erfindungsgemäßen Ausführungsform eines Hybrid-Fahrzeugs,
- Fig. 2: ein Flussdiagramm einer ersten erfindungsgemäßen Ausführungsform eines Verfahrens zur Steuerung eines Antriebsstrangs in einem Hybrid-Fahrzeug,
- Fig. 3: ein erstes Paar Diagramme zur Bestimmung eines Start-Parameters in einer ersten erfindungsgemäßen Ausführungsform des Verfahrens,
- Fig. 4: eine schematische Darstellung einer weiteren erfindungsgemäßen Ausführungsform eines Hybrid-Fahrzeugs,
- Fig. 5: ein Flussdiagramm einer weiteren erfindungsgemäßen Ausführungsform eines Verfahrens zur Steuerung eines Antriebsstrangs in einem Hybrid-Fahrzeug und
- Fig. 6: ein weiteres Paar Diagramme zur Bestimmung eines Start-Parameters in einer weiteren erfindungsgemäßen Ausführungsform des Verfahrens.

Nachfolgend bezeichnen gleiche Bezugszeichen Elemente mit gleichen oder ähnlichen technischen Merkmalen.

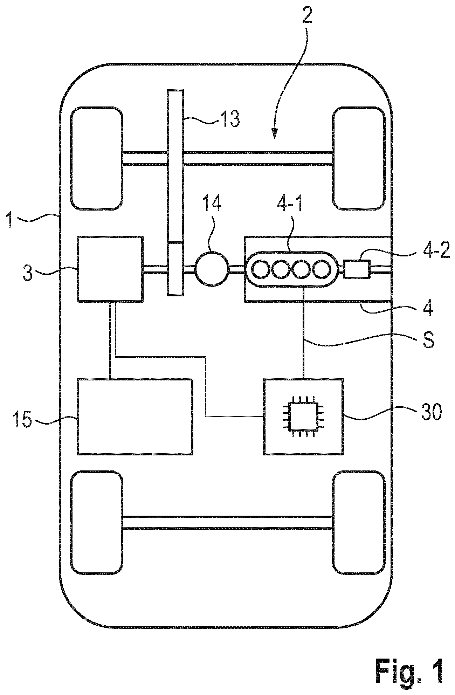

Fig. 1 zeigt eine schematische Darstellung einer erfindungsgemäßen Ausführungsform eines Hybrid-Fahrzeugs 1. Das Hybrid-Fahrzeug 1 umfasst einen Antriebsstrang 2. Der Antriebsstrang 2 weist in der dargestellten Ausführungsform einen ersten Antrieb 3 auf, der als Elektromotor ausgebildet ist. Eine Batterie 15 versorgt den ersten Antrieb 3 und andere elektrische bzw. elektronische Komponenten mit elektrischer Energie.

Ferner weist der Antriebsstrang 2 einen weiteren Antrieb 4 auf, der eine Verbrennungskraftmaschine 4-1 und eine Abgasnachbehandlung 4-2 umfasst. Ein zugehöriger Tank zur Kraftstoffversorgung der Verbrennungskraftmaschine 4-1 ist nicht dargestellt.

Der Antriebsstrang 2 umfasst ferner Maschinenelemente wie z.B. ein Getriebe 13, welches die Leistung vom ersten Antrieb 3 und/oder vom weiteren Antrieb 4 auf eine Achse bzw. die entsprechenden Räder des Hybrid-Fahrzeugs 1 überträgt. Weitere Maschinenelemente sind eine Kupplung 14 zwischen dem weiteren Antrieb 4 und dem Getriebe 13, sodass die von dem weiteren Antrieb 4 erzeugte Leistung z.B. unmittelbar zur Fortbewegung genutzt werden kann. Nach dem Starten des weiteren Antriebs 4 kann der erste Antrieb 3 selbstverständlich auch als Generator verwendet werden und die durch den weiteren Antrieb 4 bereitgestellte Energie in elektrische Energie zum Laden der Batterie 15 umgewandelt werden.

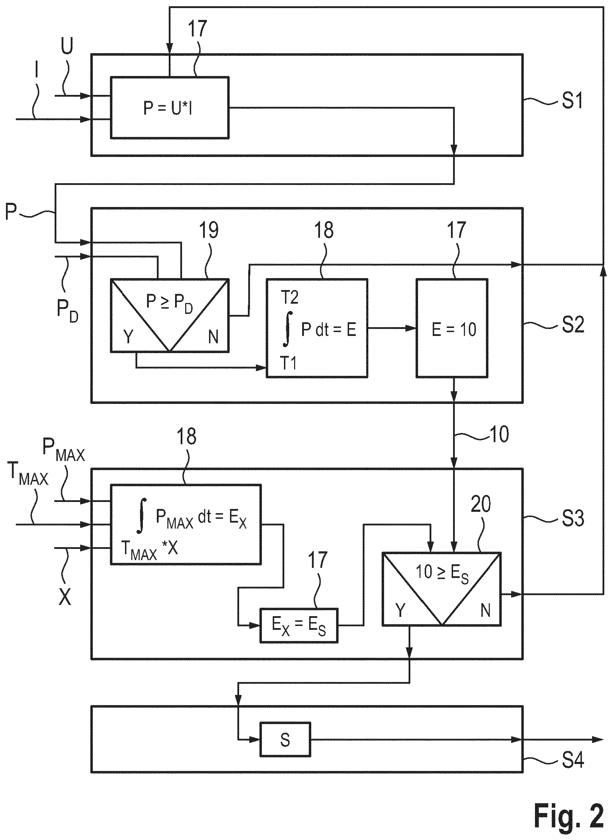

Ferner umfasst das Hybrid-Fahrzeug 1 eine Einrichtung 30 zur Steuerung des Antriebsstrangs 2. Die Einrichtung 30 weist einen Mikrocontroller auf und ist in der dargestellten Ausführungsform dazu ausgebildet, das in Fig. 2 gezeigte Verfahren zur Steuerung des Antriebsstrangs 2 auszuführen. Signale zum Ausführen des Verfahrens kann die Einrichtung 30 über entsprechende Leitungen (in Fig. 1 als einfache Linien dargestellt) empfangen und/oder ausgeben. Eine Leitung, die ein Signal S zum Starten der Verbrennungskraftmaschine 4-1 von der Einrichtung 30 zum weiteren Antrieb 4 leiten kann, ist ebenfalls dargestellt.

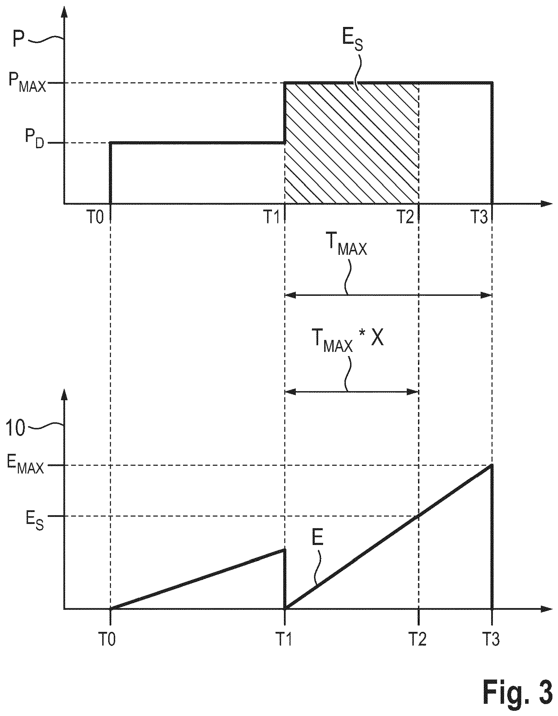

Fig. 2 zeigt ein Flussdiagramm einer erfindungsgemäßen Ausführungsform eines Verfahrens zur Steuerung eines Antriebsstrangs 2 in einem Hybrid-Fahrzeug 1. Das Verfahren umfasst mehrere Schritte S1, S2, S3 und S4, die iterativ ausgeführt werden. Eine Iteration des Verfahrens beginnt mit einem ersten Schritt S1. Jeder Schritt S1, S2, S3, S4 des Verfahrens bezieht sich innerhalb einer jeweiligen Iteration des Verfahrens auf einen Zeitpunkt, der als Ist-Zeitpunkt T2 bezeichnet wird. Mit anderen Worten: Der Ist-Zeitpunkt T2 entspricht einem Zeitstempel zu Beginn der Laufzeit einer Iteration des Verfahrens. Ist eine Iteration des Verfahrens beendet, beginnt eine neue Iteration mit einem neuen Ist-Zeitpunkt T2. Das Verfahren beginnt z.B. zu Beginn einer Fahrt. Der Zeitpunkt des Beginns einer Fahrt kann mit T0 bezeichnet werden (vgl. Fig. 3).

In einem ersten Schritt S1 wird die zum Betrieb des ersten Antriebs 2 bereitgestellte Leistung P überwacht. Hierzu werden für den Ist-Zeitpunkt T2 die an dem ersten Antrieb 2 anliegende Spannung U und Stromstärke I erfasst, z.B. mittels entsprechender Sensoren. Die Werte der Spannung U und Stromstärke I sind hierbei Eingabe-Werte in das Verfahren, die in einer numerischen Operation 17 zu einem Wert der bereitgestellten Leistung P für den Ist-Zeitpunkt T2 verarbeitet werden.

In einem weiteren Schritt S2 wird überprüft, ob der ermittelte Wert der bereitgestellten Leistung P größer oder gleich einem vorbestimmten Wert P_{D} einer Dauerleistung des ersten Antriebs 2 ist. Diese Überprüfung wird auch als Vor-Kriterium 19 bezeichnet. Ist das Vor-Kriterium 19 nicht erfüllt N, d.h. P < P_{D}, wird die Iteration für den Ist-Zeitpunkt T2 beendet und eine neue Iteration für einen nachfolgenden Ist-Zeitpunkt T2 wird gestartet (dargestellt durch den zu Schritt S1 führenden Pfeil). Dies kann so lange wiederholt werden, bis das Vor-Kriterium 19 erfüllt ist. Ist das Vor-Kriterium 19 erfüllt Y, wird der Ist-Zeitpunkt T2, für welchen das Vor-Kriterium 19 erfüllt wurde, als erster Zeitpunkt T1 bestimmt. Der erste Zeitpunkt T1 dient hierbei als Referenz für das Bestimmen einer Energiemenge E.

In dem weiteren Schritt S2 folgt nun eine numerische Integration 18, wobei die Energiemenge E als zeitliches Integral über die bereitgestellte Leistung P von dem ersten Zeitpunkt T1 bis zu dem Ist-Zeitpunkt T2 ermittelt wird. Das so bestimmte Integral kann auch als Leistungsintegral bezeichnet werden. Der Wert des Leistungsintegrals entspricht der Energiemenge, die verwendet wird, um eine Leistung oberhalb des Werts P_{D} der Dauerleistung über den Zeitraum T1, T2 bereitzustellen. Diese Energiemenge E kann z.B. mit einem Wärmeeintrag in den ersten Antrieb 3 korrelieren, wobei der Wärmeeintrag z.B. einen entsprechenden Grenzwert nicht übersteigen sollte.

Es sei erwähnt, dass der resultierende Wert des Integrals in der ersten Iteration nach Erfüllen des Vor-Kriteriums 19 selbstverständlich maschinengenau null ist, da der erste Zeitpunkt T1 dem Ist-Zeitpunkt T2 dieser Iteration entspricht. In den nachfolgenden Iterationen des Verfahrens steigt der Wert des Leistungsintegrals weiter an, wenn das Vor-Kriterium 19 auch von den nachfolgenden Werten der bereitgestellten Leistung P erfüllt ist. Die entsprechenden Werte der Leistung P aus den vorherigen Iterationen kann das Verfahren zum Zwecke der weiteren numerischen Integration 18 aus einer Speichereinheit abrufen (nicht dargestellt).

Ziel des weiteren Schritt S2 ist es ferner, einen Start-Parameter 10 zu bestimmen. Vorliegend wird im Anschluss an die numerische Integration 18 in einer numerischen Operation 17 dem Start-Parameter 10 hierzu der Wert der ermittelten Energiemenge E zugewiesen.

In einem weiteren Schritt S3 wird das Start-Kriterium 20 mit Hilfe des Start-Parameters 10 ausgewertet. Um das Start-Kriterium 20 zu erfüllen, muss der aktuelle Wert des Start-Parameters 10 größer oder gleich einer Schwellenwert-Energiemenge Es sein. Die Schwellenwert-Energiemenge E_{S} kann z.B. derart bestimmt sein, dass der zuvor erwähnte Grenzwert für einen entsprechenden Wärmeeintrag in den ersten Antrieb 3 nicht überschritten wird.

In Fig. 2 wird die Schwellenwert-Energiemenge E_{S} in dem weiteren Schritt S3 wie folgt bestimmt. Ein vorbestimmter Wert P_{MAX} der Peak-Leistung des ersten Antriebs 3 und ein Wert einer zugehörigen Maximal-Zeitdauer T_{MAX} sowie ein Skalierungsfaktor X sind Eingabe-Werte in das Verfahren. Der Wert P_{MAX} der Peak-Leistung entspricht dem Maximal-Wert der Leistung, der theoretisch mittels des ersten Antriebs 3 erreicht werden kann. Die Maximal-Zeitdauer T_{MAX} entspricht der Zeitdauer, über welchen die Peak-Leistung P_{MAX} theoretisch zur Verfügung gestellt werden kann, ohne dass es zu dem zuvor erläuterten Wärmeeintrag kommt. Der Skalierungsfaktor X kann z.B. einem vorbestimmten Sicherheitsfaktor entsprechen, um welchen die Maximal-Zeitdauer T skaliert wird.

Mittels numerischer Integration 18 lässt sich aus diesen Eingabe-Werten eine Teilmenge E_{MAX} einer Maximal-Energiemenge E_{MAX} ermitteln, wobei die Maximal-Energiemenge E_{MAX} der zur Bereitstellung der Peak-Leistung P_{MAX} über die vorbestimmte Maximal-Zeitdauer T_{MAX} notwendigen Energiemenge entspricht. Die Teilmenge Ex entspricht der um den Skalierungsfaktor X skalierten Maximal-Energiemenge E_{MAX}.

In einer weiteren numerischen Operation 17 wird der Wert der Teilmenge Ex dem Wert der Schwellenwert-Energiemenge E_{S} zugewiesen. Dieser Wert der Schwellenwert-Energiemenge E_{S} bildet nun den Grenzwert für den aktuellen Wert des Start-Parameters 10 in der jeweiligen Iteration des Verfahrens (vgl. Fig. 3).

Wird das Start-Kriterium 20 vom aktuellen Wert des Start-Parameters 10 nicht erfüllt N, d.h. 10 < E_{S}, ist die Iteration an dieser Stelle beendet und eine neue Iteration wird begonnen (dargestellt durch den zu Schritt S1 führenden Pfeil). Ist der Wert des Start-Parameters 10 hingegen größer oder gleich der Schwellenwert-Energiemenge E_{S}, so ist das Start-Kriterium 20 erfüllt Y und ein Starten des weiteren Antriebs 4 wird freigegeben.

In einem weiteren Schritt S4 wird dann von der Einrichtung 30 ein Signal S zum Starten des weiteren Antriebs 4 erzeugt und an diesen ausgegeben (vgl. Fig. 1). Durch das Starten des weiteren Antriebs 4 kann der erste Antrieb 3 dann entsprechend entlastet werden, z.B. indem zumindest ein Anteil der zur Fortbewegung des Hybrid-Fahrzeugs 1 notwendigen Leistung durch den weiteren Antrieb 4 bereitgestellt wird.

Durch das Verfahren ergibt sich somit in vorteilhafter Weise, dass der weitere Antrieb 4 erst gestartet wird, wenn dies zum Zwecke einer Entlastung des ersten Antriebs 3 notwendig erscheint. So lassen sich nicht-notwendige Emissionen durch den weiteren Antrieb 4 entsprechend vermeiden.

Fig. 3 zeigt ein erstes Paar Diagramme zur Bestimmung eines Start-Parameters 10 entsprechend der ersten Ausführungsform des erfindungsgemäßen Verfahrens (vgl. Fig. 2).

Das obere Diagramm zeigt einen idealisierten Verlauf der bereitgestellten Leistung P von einem Zeitpunkt T0 des Beginns einer Fahrt bis zu einem Ist-Zeitpunkt T2. Ferner ist ein theoretischer Zeitpunkt T3 dargestellt, welcher einem End-Zeitpunkt der Maximal-Zeitdauer T_{MAX} entspricht. Die Maximal-Zeitdauer T_{MAX} kann z.B. vorbestimmt sein und wurde vorhergehend erläutert.

Zu Beginn der Fahrt wird gemäß des oberen Diagramms konstant ein Wert als Leistung P zum Betrieb des ersten Antriebs 3 bereitgestellt, der einem Wert P_{D} der Dauerleistung des ersten Antriebs 3 entspricht. Abwärme, die bei der Bereitstellung dieses Werts P_{D} der Leistung entsteht, kann z.B. über eine Kühlvorrichtung (nicht dargestellt) des Hybrid-Fahrzeugs 1 entsprechend abtransportiert werden, ohne dass es zu einer Wärmeakkumulation im ersten Antrieb 3 kommt.

Zu einem ersten Zeitpunkt T1 springt die bereitgestellte Leistung P von dem Wert P_{D} der Dauerleistung auf einen Wert P_{MAX} an, beispielsweise weil der Nutzer des Hybrid-Fahrzeugs 1 eine erhöhte Antriebsleistung anfordert. Der Wert P_{MAX} entspricht hierbei der Peak-Leistung des ersten Antriebs 3. Bezugnehmend auf Fig. 2 wird zum Zeitpunkt T1 daher das zuvor erläuterte Vor-Kriterium 19 erfüllt und die bereitgestellte Energiemenge E wird mittels numerischer Integration 18 ermittelt (vgl. Schritt S3 in Fig. 2 und unteres Diagramm in Fig. 3).

Weiter bezugnehmend auf Fig. 2 kann aus der Maximal-Zeitdauer T_{MAX} und einem z.B. vorbestimmten Skalierungsfaktor X eine Teilemenge Ex einer Maximal-Energiemenge E_{MAX} ermittelt werden (vgl. Schritt S3 in Fig. 2). Im oberen Diagramm entspricht der Wert der Teilmenge Ex dem Flächeninhalt unterhalb des Verlaufs der bereitgestellten Leistung P zwischen den Zeitpunkten T1 und T2. Dies ist durch eine Schraffur gekennzeichnet. Die Teilmenge Ex wird dann als Schwellenwert-Energiemenge E_{S} im Start-Kriterium 20 verwendet (vgl. Schritt S3 in Fig. 2 und unteres Diagramm in Fig. 3).

Das untere Diagramm zeigt einen entsprechende Verlauf der Werte des Start-Parameters 10. Vorliegend ergibt sich aufgrund des konstanten Leistungswert P_{MAX} im oberen Diagramm ein linearer Verlauf des Start-Parameters 10 bzw. der bereitgestellten Energiemenge E. Es ist allerdings auch denkbar, dass sich ein nicht-linearer Verlauf ergibt, z.B. wenn die bereitgestellte Leistung P einen nicht-konstanten Verlauf aufweist.

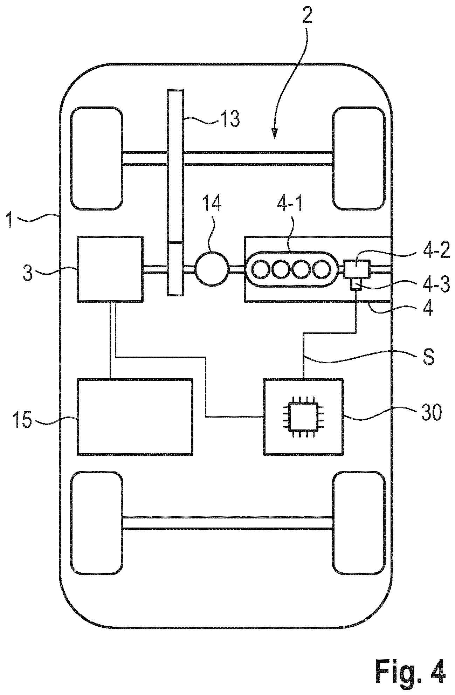

Fig. 4 zeigt eine schematische Darstellung einer weiteren erfindungsgemäßen Ausführungsform eines Hybrid-Fahrzeugs 1. Das in Fig. 4 gezeigte Hybrid-Fahrzeug 1 weist im Gegensatz zu der in Fig. 1 dargestellten Ausführungsform einen weiteren Antrieb 4 auf, der eine Verbrennungskraftmaschine 4-1, eine Abgasnachbehandlung 4-2 und ein Heizelement 4-3 umfasst. Das Heizelement 4-3 wird in Folge des in Schritt S4 erzeugten Signals S eingeschaltet. Dies entspricht einem Starten des weiteren Antriebs 4 und dient dem Vorheizen der Abgasnachbehandlung 4-2. Ein Start der Verbrennungskraftmaschine 4-1 kann dann erfolgen, wenn die Abgasnachbehandlung 4-2 auf eine entsprechende Temperatur vorgeheizt ist.

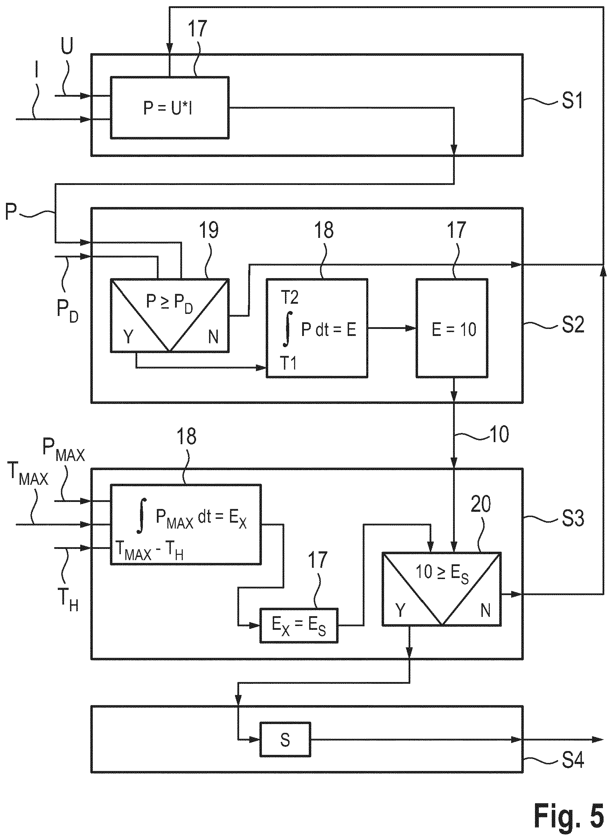

Fig. 5 zeigt ein Flussdiagramm einer weiteren erfindungsgemäßen Ausführungsform eines Verfahrens zur Steuerung eines Antriebsstrangs 2 in einem Hybrid-Fahrzeug 1. Das in Fig. 4 gezeigte Verfahren weist im Vergleich zu der in Fig. 2 dargestellten Ausführungsform einen veränderten Schritt S3 auf.

In dem in Fig. 5 gezeigten Schritt S3 ist das zur Ermittlung der Schwellenwert-Energiemenge 21 herangezogene Zeitintervall anders bestimmt. Das zur numerischen Integration 18 herangezogene Zeitintervall bestimmt sich in der dargestellten Ausführungsform nämlich als Differenz zwischen der Maximal-Zeitdauer T_{MAX} und einer Vorheiz-Zeitdauer T_{H}, die für das Vorheizen der in Fig. 4 gezeigten Abgasnachbehandlung 4-2 benötigt wird. Der Wert T_{H} der Vorheiz-Zeitdauer kann vorbestimmt sein oder z.B. in Abhängigkeit einer Ist-Temperatur der Abgasnachbehandlung 4-2 bestimmt werden. Durch die numerische Integration 18 wird so eine Teilmenge Ex einer Maximal-Energiemenge E_{MAX} bestimmt.

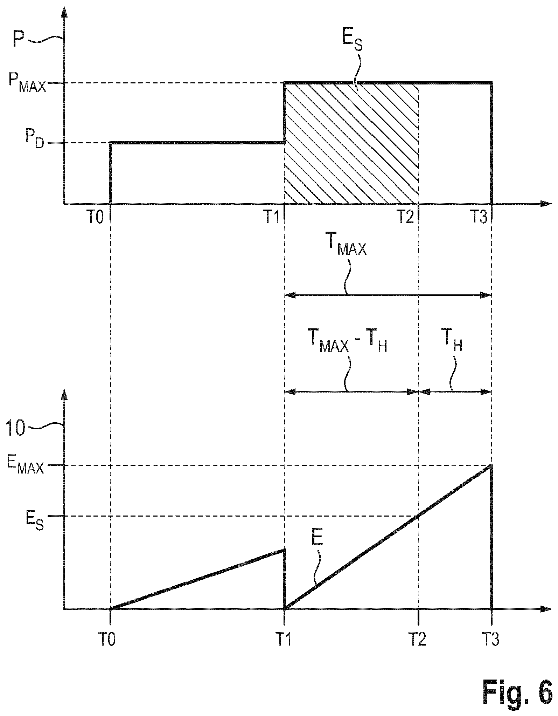

In einer weiteren numerischen Operation 17 wird der Wert der Teilmenge Ex dem Wert der Schwellenwert-Energiemenge E_{S} zugewiesen. Dieser Wert der Schwellenwert-Energiemenge E_{S} bildet nun den Grenzwert für den aktuellen Wert des Start-Parameters 10 in der jeweiligen Iteration des Verfahrens (vgl. Fig. 6).

Fig. 6 zeigt ein weiteres Paar Diagramme zur Bestimmung eines Start-Parameters 10 entsprechend der weiteren Ausführungsform des erfindungsgemäßen Verfahrens. Im Gegensatz zu dem in Fig. 3 gezeigten ersten Paar Diagramme bezieht sich das in Fig. 6 gezeigte Paar Diagramme auf die in Fig. 4 dargestellte Ausführungsform des erfindungsgemäßen Verfahrens (vgl. Fig. 4).

In Fig. 6 wird ersichtlich, dass die Teilmenge Ex der Maximal-Energiemenge E_{MAX} - im Gegensatz zu der in Fig. 2 und 3 erläuterten Ausführungsform - auch mit Hilfe der Differenz zwischen der Maximal-Zeitdauer T_{MAX} und einem Wert T_{H} der Vorheiz-Zeitdauer ermittelt werden kann (vgl. Schritt S3 in Fig. 4).

### Bezugszeichenliste

- 1: Hybrid-Fahrzeug
- 2: Antriebsstrang
- 3: erster Antrieb
- 4: weiterer Antrieb
- 4-1: Verbrennungskraftmaschine
- 4-2: Abgasnachbehandlung
- 4-3: Heizelement
- 10: Start-Parameter
- 13: Getriebe
- 14: Kupplung
- 15: Batterie
- 17: numerische Operation
- 18: numerische Integration
- 19: Vor-Kriterium
- 20: Start-Kriterium
- 30: Einrichtung zur Steuerung des Antriebsstrangs
- E: bereitgestellte Energiemenge
- E_{MAX}: Maximal-Energiemenge
- E_{S}: Schwellenwert-Energiemenge
- E_{X}: Wert einer Teilmenge einer Maximal-Energiemenge
- I: Stromstärke
- P: bereitgestellte Leistung
- P_{MAX}: Wert einer vorbestimmten Peak-Leistung des ersten Antriebs
- P_{D}: Wert einer vorbestimmten Dauerleistung des ersten Antriebs
- N: Kriterium nicht erfüllt
- S: Signal zum Starten des weiteren Antriebs
- S1: erster Schritt
- S2: weiterer Schritt
- S3: weiterer Schritt
- S4: weiterer Schritt
- U: Spannung
- T: Maximal-Zeitdauer
- T0: Zeitpunkt zu Beginn der Fahrt
- T1: erster Zeitpunkt
- T2: Ist-Zeitpunkt
- T3: End-Zeitpunkt der Maximal-Zeitdauer
- T_{MAX}: Maximal-Zeitdauer
- T_{H}: Vorheiz-Zeitdauer
- X: Skalierungsfaktor
- Y: Kriterium erfüllt

## Patentansprüche

1. Verfahren zur Steuerung eines Antriebsstrangs (2) in einem Hybrid-Fahrzeug (1), wobei der Antriebsstrang (2) mindestens einen ersten Antrieb (3) und mindestens einen weiteren Antrieb (4) aufweist, wobei das Verfahren die folgenden Schritte umfasst:
- Überwachen (S1) einer zum Betrieb des ersten Antriebs (3) bereitgestellten Leistung (P),
- Bestimmen (S2) mindestens eines Start-Parameters (10) in Abhängigkeit der bereitgestellten Leistung (P),
- Auswerten (S3), ob der mindestens eine Start-Parameter (10) ein Start-Kriterium (20) erfüllt,
- Starten (S4) des weiteren Antriebs (4), wenn der mindestens eine Start-Parameter (10) das Start-Kriterium (20) erfüllt,
**dadurch gekennzeichnet, dass**
der mindestens eine Start-Parameter (10) als eine zum Betrieb des ersten Antriebs (3) bereitgestellte Energiemenge (E) bestimmt wird, wobei das Start-Kriterium (20) erfüllt ist, wenn die bereitgestellte Energiemenge (E) größer oder gleich einer Schwellenwert-Energiemenge (ES) ist, wobei die bereitgestellte Energiemenge (E) als zeitliches Integral über die bereitgestellte Leistung (P) von einem ersten Zeitpunkt (T1) bis zu einem Ist-Zeitpunkt (T2) ermittelt wird.

2. Verfahren nach Anspruch 1, **dadurch gekennzeichnet, dass** das Start-Kriterium (20) in Abhängigkeit von einem Wert (P_{MAX}) einer Peak-Leistung des ersten Antriebs (3) bestimmt wird.

3. Verfahren nach Anspruch 1 oder 2, **dadurch gekennzeichnet, dass** das Start-Kriterium (20) in Abhängigkeit von einem Wert (T_{H}) einer zum Vorheizen des weiteren Antriebs (4) notwendigen Zeitdauer bestimmt wird.

4. Verfahren nach Anspruch 3, **dadurch gekennzeichnet, dass** der Wert (T_{H}) der zum Vorheizen des weiteren Antriebs (4) notwendigen Zeitdauer in Abhängigkeit einer Ist-Temperatur des weiteren Antriebs (4) bestimmt wird.

5. Verfahren nach einem der vorangegangenen Ansprüche, **dadurch gekennzeichnet, dass** die Schwellenwert-Energiemenge (E_{S}) als Wert (E_{X}) einer Teilmenge einer Maximal-Energiemenge (E_{MAX}) bestimmt wird, wobei die Maximal-Energiemenge (E_{MAX}) der zur Bereitstellung der Peak-Leistung über eine Maximal-Zeitdauer (T_{MAX}) notwendigen Energiemenge entspricht.

6. Verfahren nach einem der vorangegangenen Ansprüche, **dadurch gekennzeichnet, dass** das Bestimmen des mindestens einen Start-Parameters (10) erst erfolgt, wenn die bereitgestellte Leistung (P) größer oder gleich einem Wert (P_{D}) einer vorbestimmten Dauerleistung des ersten Antriebs (3) ist.

7. Verfahren nach einem der vorangegangenen Ansprüche, **dadurch gekennzeichnet, dass** das Starten des weiteren Antriebs (20) erst erfolgt, wenn die zum Betrieb des ersten Antriebs (3) bereitgestellte Leistung (P) um einen Wert reduziert wurde, der einer Leistung entspricht, die zum Starten des weiteren Antriebs (4) benötigt wird.

8. Hybrid-Fahrzeug (1) mit einem Antriebsstrang (2), wobei der Antriebsstrang (2) mindestens einen ersten Antrieb (3) und mindestens einen weiteren Antrieb (4) aufweist, wobei das Hybrid-Fahrzeug (1) ferner eine Einrichtung (30) zur Steuerung des Antriebsstrangs (2) umfasst, wobei die Einrichtung (30) dazu ausgebildet ist, ein Verfahren nach einem der Ansprüche 1 bis 7 auszuführen.

## Claims

1. Method for controlling a drive train (2) in a hybrid vehicle (1), the drive train (2) having at least one first drive (3) and at least one further drive (4), the method comprising the following steps:
- monitoring (S1) a power (P) provided for operating the first drive (3),
- determining (S2) at least one start parameter (10) depending on the power (P) provided,
- evaluating (S3) whether the at least one start parameter (10) fulfills a start criterion (20),
- starting (S4) the further drive (4) if the at least one start parameter (10) fulfills the start criterion (20),
**characterized in that**
the at least one start parameter (10) is determined as an amount of energy (E) provided for operating the first drive (3), the start criterion (20) being fulfilled if the amount of energy (E) provided is greater than or equal to a threshold amount of energy (ES), the amount of energy (E) provided being determined as a time integral over the provided power (P) from a first time (T1) to an actual time (T2).

2. Method according to claim 1, **characterized in that** the start criterion (20) is determined depending on a value (P_{MAX}) of a peak power of the first drive (3).

3. Method according to claim 1 or 2, **characterized in that** the start criterion (20) is determined depending on a value (T_{H}) of a time period necessary for preheating the further drive (4).

4. Method according to claim 3, **characterized in that** the value (T_{H}) of the time period necessary for preheating the further drive (4) is determined depending on an actual temperature of the further drive (4).

5. Method according to any of the preceding claims, **characterized in that** the threshold amount of energy (Es) is determined as a value (E_{X}) of a subset of a maximum amount of energy (E_{MAX}), the maximum amount of energy (E_{MAX}) corresponding to the amount of energy necessary for providing the peak power over a maximum period of time (T_{MAX}).

6. Method according to any of the preceding claims, **characterized in that** the determination of the at least one start parameter (10) only takes place when the power (P) provided is greater than or equal to a value (P_{D}) of a predetermined continuous power of the first drive (3).

7. Method according to any of the preceding claims, **characterized in that** the starting of the further drive (20) only takes place when the power (P) provided for operating the first drive (3) has been reduced by a value which corresponds to a power required for starting the further drive (4).

8. Hybrid vehicle (1) comprising a drive train (2), wherein the drive train (2) has at least one first drive (3) and at least one further drive (4), wherein the hybrid vehicle (1) further comprises a device (30) for controlling the drive train (2), wherein the device (30) is designed to carry out a method according to any of claims 1 to 7.

## Revendications

1. Procédé de commande d'une chaîne cinématique (2) dans un véhicule hybride (1), dans lequel la chaîne cinématique (2) présente au moins un premier entraînement (3) et au moins un autre entraînement (4), dans lequel le procédé comprend les étapes suivantes :
- surveillance (S1) d'une puissance (P) fournie pour faire fonctionner le premier entraînement (3),
- détermination (S2) d'au moins un paramètre de démarrage (10) en fonction de la puissance (P) fournie,
- évaluation (S3) établissant si l'au moins un paramètre de démarrage (10) satisfait à un critère de démarrage (20),
- démarrage (S4) de l'autre entraînement (4) lorsque l'au moins un paramètre de démarrage (10) satisfait au critère de démarrage (20), **caractérisé en ce que**
l'au moins un paramètre de démarrage (10) est déterminé en tant que quantité d'énergie (E) fournie pour le fonctionnement du premier entraînement (3), dans lequel le critère de démarrage (20) est satisfait lorsque la quantité d'énergie (E) fournie est supérieure ou égale à une quantité d'énergie de valeur seuil (ES), dans lequel la quantité d'énergie (E) fournie est déterminée en tant qu'intégrale temporelle sur la puissance (P) fournie d'un premier moment (T1) à un moment réel (T2).

2. Procédé selon la revendication 1, **caractérisé en ce que** le critère de démarrage (20) est déterminé en fonction d'une valeur (P_{MAX}) d'une puissance de crête du premier entraînement (3).

3. Procédé selon la revendication 1 ou 2, **caractérisé en ce que** le critère de démarrage (20) est déterminé en fonction d'une valeur (T_{H}) d'une durée nécessaire au préchauffage de l'autre entraînement (4).

4. Procédé selon la revendication 3, **caractérisé en ce que** la valeur (T_{H}) de la durée nécessaire au préchauffage de l'autre entraînement (4) est déterminée en fonction d'une température réelle de l'autre entraînement (4).

5. Procédé selon l'une des revendications précédentes, **caractérisé en ce que** la quantité d'énergie de valeur seuil (Es) est déterminée en tant que valeur (E_{X}) d'une quantité partielle d'une quantité d'énergie maximale (E_{MAX}), dans lequel la quantité d'énergie maximale (E_{MAX}) correspond à la quantité d'énergie nécessaire pour fournir la puissance de crête sur une période de temps maximale (T_{MAX}).

6. Procédé selon l'une des revendications précédentes, **caractérisé en ce que** la détermination de l'au moins un paramètre de démarrage (10) n'est effectuée que lorsque la puissance (P) fournie est supérieure ou égale à une valeur (P_{D}) d'une puissance continue prédéterminée du premier entraînement (3).

7. Procédé selon l'une des revendications précédentes, **caractérisé en ce que** le démarrage de l'autre entraînement (20) n'est effectué que lorsque la puissance (P) fournie pour le fonctionnement du premier entraînement (3) a été réduite d'une valeur qui correspond à une puissance nécessaire pour le démarrage de l'autre entraînement (4).

8. Véhicule hybride (1) comportant une chaîne cinématique (2), dans lequel la chaîne cinématique (2) présente au moins un premier entraînement (3) et au moins un autre entraînement (4), dans lequel le véhicule hybride (1) comprend en outre un dispositif (30) de commande de la chaîne cinématique (2), dans lequel le dispositif (30) est conçu pour mettre en œuvre un procédé selon l'une des revendications 1 à 7.
